# EUROPEAN PATENT SPECIFICATION

(11) **EP 2 098 117 B1**
(45) Date of publication and mention of the grant of the patent: **13.05.2015**
(21) Application number: 09154171.4
(22) Date of filing: 03.03.2009
(51) Int. Cl.: A01M 7/00

(54) **Spraying device for spraying liquid on vegetation**
Flüssigkeitszerstäuber zum Sprühen von Pflanzen
Dispositif pour pulvériser du liquide sur de la végétation

(30) Priority: 03.03.2008 NL 2001344
(43) Date of publication of application: 09.09.2009
(73) Proprietor: Hoeben, Henricus Johannes Godefridus Maria, 6026 RH Maarheeze (NL)
(72) Inventor: Hoeben, Henricus Johannes Godefridus Maria, 6026 RH Maarheeze (NL)
(74) Representative: Verhees, Godefridus Josephus Maria

(56) References cited:
- EP-A- 1 083 789
- WO-A-03/005799

## Description

### Field of the invention.

The invention relates to a field crop spray apparatus for spraying crops with liquids according to the preamble of claim 1, the apparatus comprising a carrier, at least one frame connected to the carrier, a blade connected to the frame and running parallel to the carrier, and a sprayer connected to the frame between the carrier and the blade, which field crop spray apparatus is intended to be mounted on an agricultural sprayer with the carrier extending at right angles to the direction of movement of the agricultural sprayer. The agricultural sprayer generally has a spray boom which is mounted on an agricultural machine. The spray boom is an elongated carrier frame which is coupled to the agricultural tractor with its longitudinal direction transversely to the direction of movement of the agricultural tractor. In that case the carrier frame extends parallel to the spray boom and is connected to the spray boom.

### State of the art.

A field crop spray apparatus of this kind is known from EP-A-1 083 789. In this known field crop spray apparatus the frame between the carrier and the blade is made of an elastic material. Owing to undulations of the ground the carrier moves up and down during the use of the field crop spray apparatus. During a down movement of the carrier the blade meets with more resistance from the crop so that the frame springs inwardly. As a result, the sprayer continues to maintain its distance from the crop, so that the liquid is distributed uniformly over the crop.

### Summary of the invention.

It is an object of the invention to improve the known field crop spray apparatus. To this end the field crop spray apparatus according to the invention is characterised in that the field crop spray apparatus comprises a coupling section for coupling to the agricultural sprayer, by means of which coupling section the carrier can be coupled to the agricultural sprayer hingeable around an axis which extends transversely to the direction of movement of the agricultural sprayer. The carrier is then hingeably connected to the coupling section within a range that is limited by the construction of the connection. The movement may be a forced movement, but preferably the carrier is connected to the agricultural sprayer in a freely hingeable manner. Since the carrier is hingeably connected to the agricultural sprayer, the sprayer connected to the frame will maintain even better the uniform distance to the crop during the up and down movement of the carrier.

The coupling section may be embodied such that it may be hingeably connected to the agricultural sprayer. However, preferably the carrier is hingeably connected to the coupling section. In that case the coupling section may be fixedly attached (thus not movably) to the agricultural sprayer. Furthermore, the carrier is connected to the coupling section preferably in a freely movable manner.

In one embodiment of the field crop spray apparatus according to the invention the carrier is connected to the coupling section by means of a spring.

In a further embodiment of the field crop spray apparatus according to the invention the blade is located partly underneath the frame and, seen in the direction of movement during use, it is located partly in front of the frame. During use the blade thus has an essentially vertical part that obstructs the wind and prevents the wind from adversely affecting the spraying process.

It should be observed that a blade that is not only located underneath the frame but also comprises a vertically turned-over part can also be used in other field crop spray apparatus than that in which the carrier is movably connected to an agricultural sprayer.

### Brief description of the drawings.

The invention will be elucidated more fully below based on examples of embodiment of the spray apparatus according to the invention while reference is made to the appended drawing figures, in which:
Fig. 1 shows a field crop spray apparatus according to the invention;
Fig. 2 shows a detail of a first embodiment of the connection between the carrier and coupling sections in the field crop spray apparatus according to the invention;
Fig. 3 shows a detail of a second embodiment of the connection between the carrier and coupling sections in the field crop spray apparatus according to the invention;
Fig. 4 shows a detail of an example of the connection between the carrier and coupling sections in the field crop spray apparatus;
Fig. 5 shows a detail of a third embodiment of the connection between the carrier and coupling sections in the field crop spray apparatus according to the invention; and Fig. 6 shows a side view of the field crop spray apparatus shown in Fig. 1.

### Detailed description of the drawings.

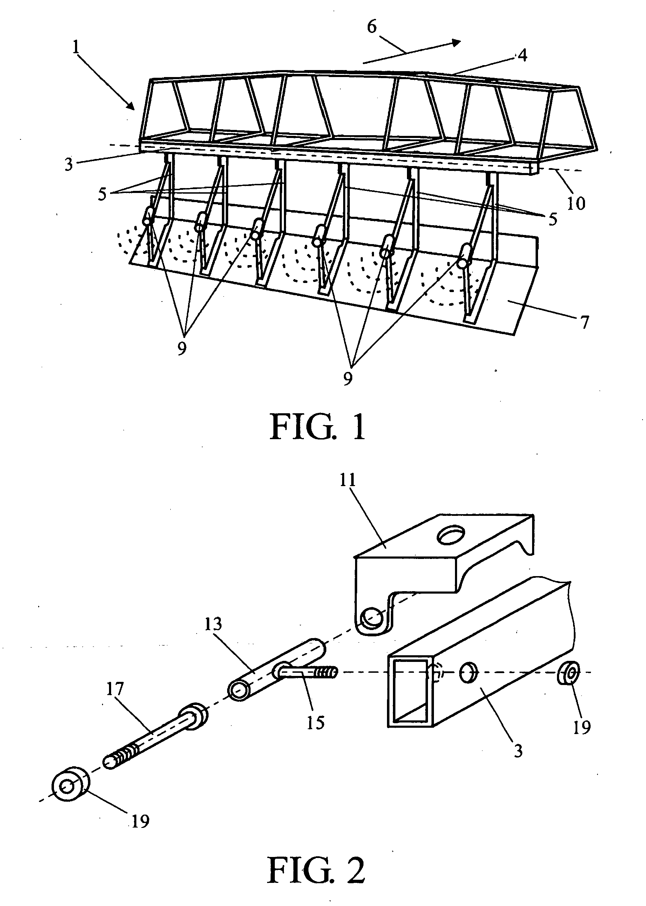

Fig. 1 shows a field crop spray apparatus 1 according to the invention. The field crop spray apparatus 1 comprises a carrier 3 which is coupled to a carrier frame 4 of an agricultural sprayer and extends in essence horizontally and at right angles to the direction of movement 6 of the agricultural sprayer. A plurality of elastic parallellogram-shaped frames 5 are attached to the carrier. A blade 7 which drags over the crop during use and runs parallel to the carrier 3 is attached to the under-side of the frames. Sprays 9 are attached to the frames 5 between the blade 7 and the carrier 3.

The field crop spray apparatus 1 further includes one or more coupling sections for coupling to the spray boom 4 of an agricultural sprayer. The carrier 3 is then, within a range that is limited by the construction of the coupling, linked with the coupling section in a freely hingeable manner around an axis 10 which extends transversely to the direction of movement 6. Figs. 2 through 5 show four different embodiments of the connection between the carrier and the coupling sections.

Fig. 2 shows a detail of a first embodiment of the connection between the carrier and the coupling sections. In this embodiment the carrier 3 is hingeably connected to coupling sections 11 which can be connected to the spray boom of an agricultural sprayer. The hinge construction is then formed by a sleeve 13 which can be attached to the carrier 3 by means of a bolt 15 attached to the sleeve at right angles, as well as a bolt 17 extending through the sleeve and connected to one of the coupling sections 11. The bolts 15, 17 are locked for example by nuts 19.

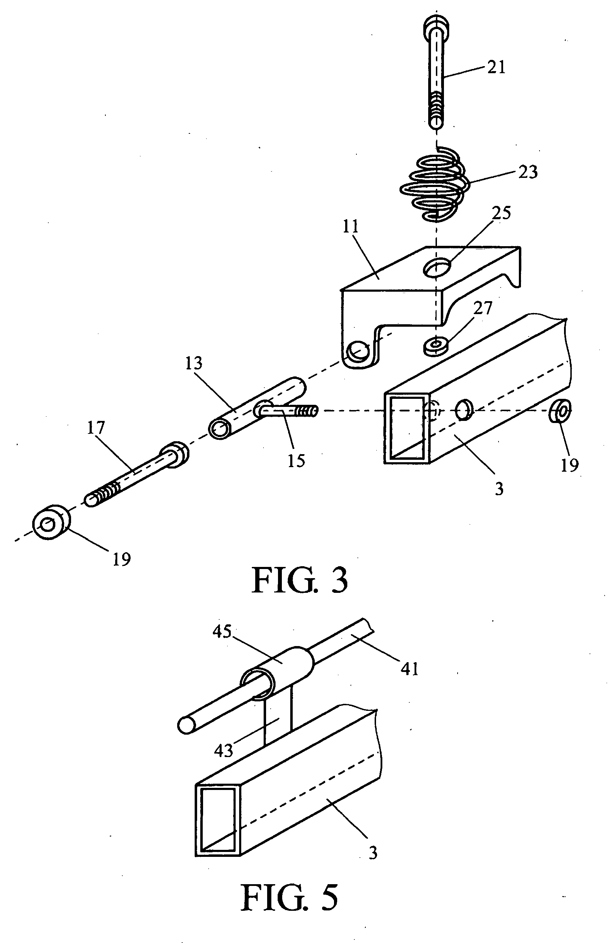

Fig. 3 shows a detail of a second embodiment of the connection between the carrier and the coupling sections. All component parts that are equal to those of the first embodiment are indicated by like reference numerals. In this embodiment the carrier 3 is connected in a freely rotatable manner to the coupling section 11, which coupling section 11 is connected in a resilient manner to a spray boom of an agricultural sprayer by means of bolts 21 and helical springs 23. The bolts 21 protrude through holes 25 in the coupling sections 11 and are locked, for example by means of a nut 27. Between the coupling sections 11 and the spray boom are located the helical springs 23 as a result of which the carrier 3 is connected to the spray boom both in a pivotable and a resilient manner (within a range that is limited by the length of the bolts 21 and the maximum possible compression of the helical springs 23).

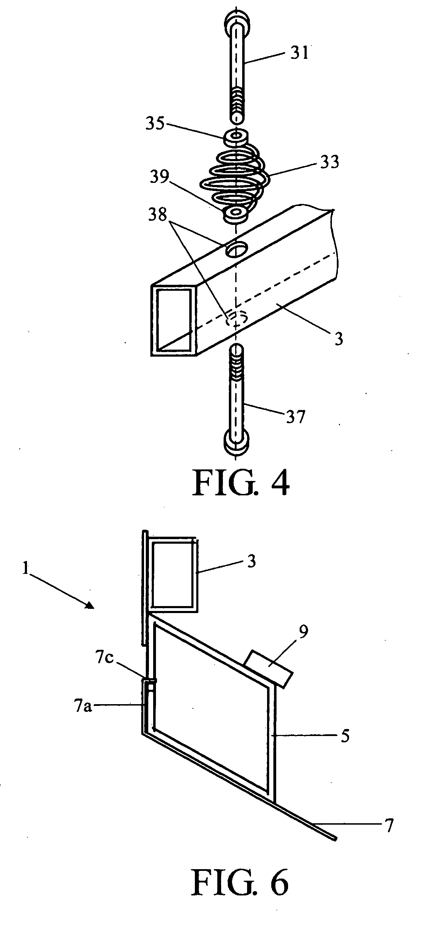

Fig. 4 shows a detail of an example of the connection between the carrier and the coupling sections. In this example the coupling sections are formed by bolts 31 which can be attached to a spray boom of an agricultural sprayer. The bolts 31 are connected to a nut 35 attached to a spring 33. Further bolts 37 protrude through holes 38 in the carrier 3 and are locked by a further nut 39 attached to the spring. As a result, the carrier 3 can be connected in a freely movable manner to a spray boom within a range that is limited by the maximum possible compression of the helical springs 33. This example does not form part of the invention.

Fig. 5 shows a detail of a fourth embodiment of the connection between the carrier and the coupling sections. In this embodiment the coupling section is formed by a rod 41. The carrier 3 is connected by means of strips 43 to sleeves 45 which can pivot freely or in a forced manner around the rod. The rod 41 may be connected to the spray boom. However, the rod 41 may also form part of the carrier frame of the spray boom and the coupling sections may be formed by the sleeves 45. In the latter case the carriers 3 are thus fixedly attached by means of the strips 43 to the coupling sections which in their turn are pivotably connected to the spray boom.

Fig. 6 shows a side view of the field crop spray apparatus 1 shown in Fig. 1. This drawing clearly indicates that the blade 7 is not only located underneath the frames 7 but, seen in direction of movement, also extends partly vertically at the front of the frame. The blade 7 thus has a vertical section 7a which obstructs the wind and prevents the wind from adversely affecting the spraying process. In order to avoid the top of the vertical part 7a bending over, the blade 7 is turned over at the top and connected with part 7b to the frames.

Albeit the invention has been described in the foregoing with reference to the drawings, it should be pointed out that the invention is not by any manner or means restricted to the embodiments shown in the drawings. The invention also extends over any embodiment deviating from the embodiment shown in the drawing figures within the scope defined by the claims.

## Claims

1. A field crop spray apparatus (1) for spraying crops with liquids, the apparatus comprising a carrier (3), at least one frame (5) connected to the carrier, a blade (7) connected to the frame and running parallel to the carrier, and a sprayer (9) connected to the frame between the carrier and the blade, which field crop spray apparatus is intended to be mounted on an agricultural sprayer with the carrier extending at right angles to the direction of movement (6) of the agricultural sprayer, **characterised in that** the field crop spray apparatus (1) comprises a coupling section (11; 41) for coupling to the agricultural sprayer, by means of which coupling section the carrier (3) can be coupled to the agricultural sprayer hingeable around an axis (10) which extends transversely to the direction of movement (6) of the agricultural sprayer.

2. A field crop spray apparatus as claimed in claim 1, **characterised in that** the carrier (3) is hingeably connected to the coupling section (11; 41).

3. A field crop spray apparatus as claimed in claim 2, **characterised in that** the carrier (3) is connected in a resilient manner to the coupling section.

4. A field crop spray apparatus as claimed in any one of the preceding claims, **characterised in that** the blade (7) is located partly underneath the frame (5) and, seen in the direction of movement (6), is located partly in front of the frame during use.

## Patentansprüche

1. Eine Feldfrucht Sprühvorrichtung (1) zum Sprühen Kulturen mit Flüssigkeiten, wobei die Vorrichtung einen Träger (3) umfasst, sowiemindestens einem Gestell (5) der mit dem Träger verbunden ist, eine Klinge (7) der mit dem Rahmen verbunden ist und parallel an der Träger ist, und ein Zerstäuber (9) der zwischen dem Träger und der Klinge mit dem Rahmen verbunden ist, welche Feldruchtsprühvorrichtung an einem landwirtschaftlichen Sprühgerät mit dem Träger montiert werden soll, wobei die Trager sich im rechten Winkel zu der Bewegungsrichtung (6) von das landwirtschaftliche Sprühgerät erstreckt, **dadurch gekennzeichnet, dass** die Feldfruchtsprühvorrichtung (1) einen Kupplungsabschnitt (11; 41) zur kopplung mit dem landwirtschaftliches Sprühgerät umfasst, wobei mit Hilfe der Kupplungsabschnitt der Träger (3) mit dem landwirtschaftlichen Sprühgerät klappbar um eine Achse (10), die sich quer zur Bewegungsrichtung (6) der landwirtschaftlichen Feldspritze erstreckt, verbunden werden kann.

2. Ein Feldfruchtsprühvorrichtung nach Anspruch 1, **dadurch gekennzeichnet, daß** der Träger (3) gelenkig mit dem Kupplungsabschnitt (11; 41) verbunden ist.

3. Eine Feldfruchtsprühvorrichtung nach Anspruch 2, **dadurch gekennzeichnet, daß** der Träger (3) in einer elastischen Weise mit dem Kupplungsabschnitt verbunden ist.

4. Eine Feldfruchtsprühvorrichtung nach einem der vorhergehenden Ansprüche, **dadurch gekennzeichnet, daß** die Klinge (7) sich teilweise unter dem Rahmen (5) befindet und in der Bewegungsrichtung (6) gesehen, während des Gebrauchs, sich teilweise vor dem Rahmen befindet.

## Revendications

1. Dispositif domaine agricole de pulvérisation (1) pour pulvériser les récoltes avec un liquide, l'appareil comprenant un support (3), au moins un cadre (5) relié au support, une lame (7) relié au châssis et se étendant parallèlement à le transporteur, et un pulvérisateur (9) reliée au châssis entre le support et la lame, lequel champ appareil agricole de pulvérisation est destiné à être monté sur un pulvérisateur agricole avec le support se étendant perpendiculairement à la direction de déplacement (6) de le pulvérisateur agricole, **caractérisée en ce que** l'appareil de terrain agricole de pulvérisation (1) comprend une partie d'accouplement (11; 41) pour le couplage au pulvérisateur agricole, au moyen de laquelle section de couplage du support (3) peut être couplé au pulvérisateur articulée agricole autour d'un axe (10) qui se étend transversalement à la direction de déplacement (6) du pulvérisateur agricole.

2. Appareil de pulvérisation agricole de champ selon la revendication 1, **caractérisé en ce que** le support (3) est articulée reliée à la partie d'accouplement (11; 41).

3. Appareil de pulvérisation agricole de champ selon la revendication 2, **caractérisé en ce que** le support (3) est reliée de manière élastique à la section de couplage.

4. Appareil de pulvérisation selon l'une quelconque des revendications précédentes, **caractérisé en ce que** la lame (7) se trouve en partie en dessous du cadre (5) et, vu dans la direction de déplacement (6), est situé en partie dans avant du cadre pendant l'utilisation.
